# EUROPEAN PATENT APPLICATION

(11) **EP 4 823 173 A1**
(43) Date of publication of application: **14.10.2026**
(21) Application number: 24899674.6
(22) Date of filing: 26.11.2024
(51) Int. Cl.: H04W 36/00

(54) **MOBILITY OPTIMIZATION METHOD AND APPARATUS, COMMUNICATION APPARATUS, AND STORAGE MEDIUM**

(30) Priority: 08.12.2023 CN 202311688756
(71) Applicant: Datang Mobile Communications Equipment Co., Ltd., Beijing 100085 (CN)
(72) Inventor: YAN, Xue, Beijing 100085 (CN); YAN, Nan, Beijing 100085 (CN)
(74) Representative: Ipsilon
(86) International application number: PCT/CN2024/134533
(87) International publication number: WO 2025/119034

(57) **Abstract**

The present disclosure relates to a method for mobility optimization, apparatus, communication device, and storage medium. In one or more embodiment of the present disclosure, when a terminal is configured with multiple types of configuration information, the terminal is in a scenario where multiple configurations coexist. In the scenario where multiple configurations coexist, if a link failure occurs at the terminal, the terminal records failure-related information, and then sends the failure-related information to a network device. The failure-related information is used by the network device to perform mobility optimization. The network device performs mobility optimization based on the failure-related information generated in the scenario where multiple configurations coexist and reported by the terminal. Compared with the related art, in which network devices cannot perform mobility optimization for the scenario where multiple configurations coexist, the present embodiment enables network devices to perform mobility optimization for the scenarios, thereby ensuring the mobility of the terminal in the scenario where multiple configurations coexist.

## Description

### CROSS-REFERENCE TO RELATED APPLICATIONS

The present disclosure claims the priority of the Chinese patent application No. 202311688756.5, filed with the China National Intellectual Property Administration on December 8, 2023, with an title "Method for Mobility Optimization, Apparatus, Communication Device, and Storage Medium", the entire contents of which are incorporated herein by reference.

### TECHNICAL FIELD

Embodiments of the present disclosure relate to the field of communication technologies, and in particular, to a method for mobility optimization, apparatus, communication device, and storage medium.

### BACKGROUND

With the development of communication technologies, a terminal may be configured with different mobility configuration information by a network. When the terminal is configured with multiple types of configuration information and a mobility problem occurs due to the failure of the terminal to execute any piece of configuration information, the network may perform mobility optimization only for the single piece of configuration information that failed to be executed. However, other unexecuted configuration information of the terminal may also cause mobility problems. Therefore, after the network performs mobility optimization for a single piece of configuration information, the terminal may still have mobility problems, which cannot meet the mobility requirements of the terminal in a scenario in which multiple configurations coexist. Currently, the network cannot perform mobility optimization for mobility problems in a scenario in which multiple types of configuration information coexist.

At least one embodiment of the present disclosure provides a method for mobility optimization, apparatus, communication device, and storage medium.

In a first aspect, an embodiment of the present disclosure provides a method for mobility optimization applied to a terminal. The method for mobility optimization includes:
recording, by the terminal, failure-related information with the terminal configured with configuration information and in response to a link failure on the terminal; wherein the configuration information comprises at least two of the following: L1/L2 triggered mobility LTM configuration information, Conditional Handover CHO configuration information, Conditional PSCell addition/change (CPAC) configuration information, and fast Master Cell Group recovery configuration information;
sending, by the terminal, the failure-related information to a network device.

In some embodiments, the link failure on the terminal includes one or more of the following:
a radio link failure RLF occurring at the terminal in a source cell,
a failure in performing LTM by the terminal;
a failure in performing LTM recovery by the terminal;
a failure in performing CHO by the terminal;
a failure in performing CHO recovery by the terminal;
a failure in performing legacy handover by the terminal;
a failure in performing CPAC by the terminal;
a failure in performing fast Master Cell Group recovery by the terminal.

In some embodiments, the failure-related information includes one or more of the following:
candidate cell information;
time information;
indication information.

In some embodiments, the candidate cell information includes one or more of the following:
LTM candidate cell information;
CHO candidate cell information;
CPAC candidate cell information.

In some embodiments, the time information includes one or more of the following:
a time interval between reception of LTM configuration information by the terminal and reception of CHO configuration information by the terminal;
a time interval between reception of LTM configuration information by the terminal and reception of CPAC configuration information by the terminal;
a time interval between reception of LTM configuration information by the terminal and initiation of CHO execution;
a time interval between the terminal reception of CHO configuration information by the terminal and initiation of LTM execution;
a time interval between reception of LTM configuration information by the terminal and initiation of CPAC execution;
a time interval between the terminal reception of CPAC configuration information by the terminal and initiation of LTM execution;
a time interval between reception of LTM configuration information by the terminal and any one of: initiation of CHO recovery, successful CHO recovery, or failed CHO recovery;
a time interval between reception of CHO configuration information by the terminal and any one of: initiation of LTM recovery, the successful LTM recovery, failed LTM recovery;
a time interval between reception of LTM configuration information by the terminal and any one of: initiation of primary cell group fast failure recovery, the successful primary cell group fast failure recovery, failed primary cell group fast failure recovery;
a time interval between a failure in performing LTM by the terminal and any one of: initiation of CHO recovery, , successful CHO recovery, or failed CHO recovery;
a time interval between a failure in performing CHO by the terminal and any one of: initiation of LTM recovery, the successful LTM recovery, failed LTM recovery;
a time interval between a failure in performing LTM by the terminal and any one of: initiation of primary cell group fast failure recovery, the successful primary cell group fast failure recovery, failed primary cell group fast failure recovery.

In some embodiments, the indication information includes one or more of the following:
type information of a recovery cell on which the terminal performs recovery;
indication information of a coexistence scenario;
indication information of consecutive execution;
indication information of timing advance, wherein the indication information of timing advance is used to indicate whether the terminal has a Timing Advance TA value of the recovery cell and/or a size of the TA value, and the recovery cell on which the terminal performs recovery is an LTM candidate cell;
indication information of downlink synchronization, wherein the indication information of downlink synchronization is used to indicate whether the terminal has performed downlink synchronization with the recovery cell, and the recovery cell on which the terminal performs recovery is an LTM candidate cell;
indication information of a same distributed unit, wherein the indication information of a same distributed unit is used to indicate whether a source cell of the terminal and the recovery cell are cells under a same Distributed Unit DU, and the recovery cell on which the terminal performs recovery is an LTM candidate cell.

In some embodiments, the candidate cell information includes one or more of the following:
identification information of a candidate cell;
execution condition of a candidate cell;
measurement results of a candidate cell.

In some embodiments, sending, by the terminal, the failure-related information to a network device comprises:
sending, by the terminal, a notification message to the network device, the notification message being used to indicate that the terminal has recorded the failure-related information, and sending, by the terminal, the failure-related information to the network device in response to a failure-related information request message sent by the network device;
   or,
after recording the failure-related information, sending, by the terminal, the failure-related information to the network device;
   and/or,
receiving, by the terminal, a failure-related information request message sent by the network device; and sending, by the terminal, the failure-related information to the network device in response to the failure-related information request message.

In a second aspect, one embodiment of the present disclosure provides a method for mobility optimization, applied to a network device. the method for mobility optimization includes:
receiving, by the network device, failure-related information sent by a terminal, wherein the failure-related information is recorded by the terminal when the terminal is configured with configuration information and a link failure occurs at the terminal; the configuration information includes at least two of the following: L1/L2 triggered mobility LTM configuration information, Conditional Handover CHO configuration information, Conditional PSCell addition/change (CPAC) configuration information, and primary cell group fast failure recovery configuration information.

In some embodiments, receiving, by the network device, failure-related information sent by the terminal comprises:
receiving, by the network device, a notification message sent by the terminal, wherein the notification message is used to indicate that the terminal has recorded failure-related information; sending, by the network device, a failure-related information request message to the terminal; receiving, by the network device, the failure-related information sent by the terminal in response to the failure-related information request message;
   and/or,
sending, by the network device, a failure-related information request message to the terminal; receiving, by the network device, the failure-related information sent by the terminal in response to the failure-related information request message.

In some embodiments, the method for for mobility optimization further includes:
performing, by the network device, mobility optimization based on the failure-related information; or
sending, by the network device, the failure-related information to a relevant network device related to the failure-related information via interface signaling for the relevant network device to perform mobility optimization based on the failure-related information.

In a third aspect, an embodiment of the present disclosure provides a communication apparatus, applied to a terminal, wherein the communication apparatus includes a memory, a transceiver, and a processor:
the memory, configured to store computer programs;
the transceiver, configured to transmit and receive data under the control of the processor;
the processor, configured to read the computer programs in the memory and execute:
   recording failure-related information with the terminal configured with configuration information and in response to a link failure on the terminal; wherein the configuration information comprises at least two of the following: L1/L2 triggered mobility LTM configuration information, Conditional Handover CHO configuration information, Conditional PSCell addition/change (CPAC) configuration information, and fast Master Cell Group recovery configuration information;
   sending the failure-related information to a network device.

In some embodiments, the link failure includes one or more of the following:
a radio link failure RLF occurring at the terminal in a source cell,
a failure in performing LTM by the terminal;
a failure in performing LTM recovery by the terminal;
a failure in performing CHO by the terminal;
a failure in performing CHO recovery by the terminal;
a failure in performing legacy handover by the terminal;
a failure in performing CPAC by the terminal;
a failure in performing fast Master Cell Group recovery by the terminal.

In some embodiments, the failure-related information includes one or more of the following:
candidate cell information;
time information;
indication information.

In some embodiments, the candidate cell information includes one or more of the following:
LTM candidate cell information;
CHO candidate cell information;
CPAC candidate cell information.

In some embodiments, the time information includes one or more of the following:
a time interval between reception of LTM configuration information by the terminal and reception of CHO configuration information by the terminal;
a time interval between reception of LTM configuration information by the terminal and reception of CPAC configuration information by the terminal;
a time interval between reception of LTM configuration information by the terminal and initiation of CHO execution;
a time interval between the terminal reception of CHO configuration information by the terminal and initiation of LTM execution;
a time interval between reception of LTM configuration information by the terminal and initiation of CPAC execution;
a time interval between the terminal reception of CPAC configuration information by the terminal and initiation of LTM execution;
a time interval between reception of LTM configuration information by the terminal and any one of: initiation of CHO recovery, successful CHO recovery, or failed CHO recovery;
a time interval between reception of CHO configuration information by the terminal and any one of: initiation of LTM recovery, the successful LTM recovery, failed LTM recovery;
a time interval between reception of LTM configuration information by the terminal and any one of: initiation of primary cell group fast failure recovery, the successful primary cell group fast failure recovery, failed primary cell group fast failure recovery;
a time interval between a failure in performing LTM by the terminal and any one of: initiation of CHO recovery, , successful CHO recovery, or failed CHO recovery;
a time interval between a failure in performing CHO by the terminal and any one of: initiation of LTM recovery, the successful LTM recovery, failed LTM recovery;
a time interval between a failure in performing LTM by the terminal and any one of: initiation of primary cell group fast failure recovery, the successful primary cell group fast failure recovery, failed primary cell group fast failure recovery.

In some embodiments, the indication information includes one or more of the following:
type information of a recovery cell on which the terminal performs recovery;
indication information of a coexistence scenario;
indication information of consecutive execution;
indication information of timing advance, wherein the indication information of timing advance is used to indicate whether the terminal has a Timing Advance TA value of the recovery cell and/or a size of the TA value, and the recovery cell on which the terminal performs recovery is an LTM candidate cell;
indication information of downlink synchronization, wherein the indication information of downlink synchronization is used to indicate whether the terminal has performed downlink synchronization with the recovery cell, and the recovery cell on which the terminal performs recovery is an LTM candidate cell;
indication information of a same distributed unit, wherein the indication information of a same distributed unit is used to indicate whether a source cell of the terminal and the recovery cell are cells under a same Distributed Unit DU, and the recovery cell on which the terminal performs recovery is an LTM candidate cell.

In some embodiments, the candidate cell information includes one or more of the following:
identification information of a candidate cell;
execution condition of a candidate cell;
measurement results of a candidate cell.

In some embodiments, sending the failure-related information to a network device comprises:
sending a notification message to the network device, the notification message being used to indicate that the terminal has recorded the failure-related information, and sending the failure-related information to the network device in response to a failure-related information request message sent by the network device;
   or,
after recording the failure-related information, sending the failure-related information to the network device;
   and/or,
receiving a failure-related information request message sent by the network device; and sending the failure-related information to the network device in response to the failure-related information request message.

In a fourth aspect, an embodiment of the present disclosure provides a communication apparatus, applied to a network device, wherein the communication apparatus includes a memory, a transceiver, and a processor:
the memory, configured to store computer programs;
the transceiver, configured to transmit and receive data under the control of the processor;
the processor, configured to read the computer programs in the memory and execute:
   receiving failure-related information sent by a terminal, wherein the failure-related information is recorded by the terminal when the terminal is configured with configuration information and a link failure occurs at the terminal; the configuration information includes at least two of the following: L1/L2 triggered mobility LTM configuration information, Conditional Handover CHO configuration information, Conditional PSCell addition/change (CPAC) configuration information, and primary cell group fast failure recovery configuration information.

In some embodiments, receiving the failure-related information sent by the terminal comprises:
receiving a notification message sent by the terminal, wherein the notification message is used to indicate that the terminal has recorded failure-related information; sending a failure-related information request message to the terminal; receiving the failure-related information sent by the terminal in response to the failure-related information request message;
   and/or,
sending a failure-related information request message to the terminal; receiving the failure-related information sent by the terminal in response to the failure-related information request message.

In some embodiments, the processor is further configured to read the computer programs in the memory and execute:
performing mobility optimization based on the failure-related information; or
sending the failure-related information to a relevant network device related to the failure-related information via interface signaling for the relevant network device to perform mobility optimization based on the failure-related information.

In a fifth aspect, an embodiment of the present disclosure further provides a processor-readable storage medium, the processor-readable storage medium stores a program, wherein the program is configured to cause a processor to execute the method for mobility optimization according to any embodiment of the first aspect or the method for mobility optimization according to any embodiment of the second aspect.

In at least one embodiment of the present disclosure, when a terminal is configured with multiple types of configuration information and is configured with a scenario in which multiple configurations coexist, if a link failure occurs at the terminal, the terminal may record failure-related information and then send the failure-related information to a network device. The failure-related information is used by the network device to perform mobility optimization. That is, the network device is triggered to perform mobility optimization based on the failure-related information reported by the terminal in the scenario in which multiple configurations coexist. Compared with the related art in which a network device cannot perform mobility optimization for a scenario in which multiple configurations coexist, the present embodiment enables the network device to perform mobility optimization for the scenario in which multiple configuration coexist, thereby ensuring the mobility of the terminal in the scenario in which multiple configurations coexist.

### BRIEF DESCRIPTION OF THE DRAWINGS

To illustrate the technical solutions of the embodiments of the present disclosure more clearly, the following briefly introduces the accompanying drawings used in the embodiments or the description of the related art. Obviously, the accompanying drawings in the following description are merely some embodiments of the present disclosure, and those of ordinary skill in the art can also obtain other drawings according to these drawings.
FIG. 1 is a schematic flowchart of a method for mobility optimization provided by an embodiment of the present disclosure;
FIG. 2 is a schematic flowchart of another method for mobility optimization provided by an embodiment of the present disclosure;
FIG. 3 is a schematic diagram of an apparatus for mobility optimization provided by an embodiment of the present disclosure;
FIG. 4 is a schematic diagram of another apparatus for mobility optimization provided by an embodiment of the present disclosure;
FIG. 5 is a schematic diagram of a communication device provided by an embodiment of the present disclosure;
FIG. 6 is a schematic diagram of another communication device provided by an embodiment of the present disclosure.

### DETAILED DESCRIPTION

In order to more clearly understand the above-mentioned objects, features, and advantages of the present disclosure, the present disclosure will be described in further detail below with reference to the accompanying drawings and embodiments. It should be understood that the embodiments are part of, but not all of, the embodiments of the present disclosure. The specific embodiments described herein are intended merely to explain the present disclosure and are not intended to limit the present disclosure. Based on the embodiments of the present disclosure, all other embodiments obtained by a person of ordinary skill in the art shall fall within the scope of protection of the present disclosure.

It should be noted that relational terms such as "first" and "second" used herein are used merely to distinguish one entity or operation from another entity or operation, without necessarily requiring or implying any such actual relationship or order between these entities or operations.

A terminal may be configured with different mobility configuration information by the network, but the network side can only perform mobility optimization for the configuration information that fails to be executed:
For example, the terminal is configured with Layer 1 and/or Layer 2 triggered mobility (LTM) configuration information and Conditional Handover (CHO) configuration information. When CHO execution fails, mobility optimization is performed only for CHO; when LTM execution fails, mobility optimization is performed only for LTM.

However, when CHO execution fails, since the network has also configured LTM configuration information for the terminal and LTM has not been executed, the LTM configuration information may also cause mobility problems. Similarly, when LTM execution fails, since the network has also configured CHO configuration information for the terminal and CHO has not been executed, the CHO configuration information may also cause mobility problems. That is to say, after mobility optimization is performed for a single piece of configuration information, the terminal may still have mobility problems, which cannot meet the mobility requirements of the terminal in a scenario in which multiple configurations coexist.

The network may send multiple types of mobility configuration information to the terminal, such as LTM configuration information, CHO configuration information, Conditional PSCell Addition/Change (CPAC) configuration information, and fast Master Cell Group (MCG) recovery configuration information. Based on the configuration information, the terminal can perform mobility operations, but network devices cannot perform mobility optimization for mobility problems in a scenario in which multiple configurations coexist.

### (I) LTM

LTM mechanism means that the network pre-configures multiple candidate cell configurations and L1 measurement configurations for the terminal. The terminal performs L1 measurement and reporting based on the L1 measurement configurations configured by the network. The network sends an LTM cell switch command to the terminal according to the L1 measurement results reported by the terminal, and the LTM cell switch command is transmitted to the terminal via a MAC CE (MAC Control Element).

When the terminal receives the LTM cell switch command sent by the network, the terminal may perform LTM cell switch. If the terminal fails to perform LTM cell switch, the terminal may execute a cell selection procedure. If the target cell selected by the terminal is an LTM candidate cell, the terminal may perform LTM recovery. If the target cell selected by the terminal is not an LTM candidate cell, the terminal triggers a re-establishment procedure. If the target cell selected by the terminal is an LTM candidate cell and the terminal fails to perform LTM recovery, the terminal may trigger a re-establishment procedure.

### (II) CHO / Conditional PSCell Addition/Change (CPAC)

CHO means that the network configures multiple CHO candidate cells and corresponding execution conditions for the terminal. The terminal evaluates the CHO candidate cells based on measurement results. If a candidate cell is evaluated to meet the execution conditions, the terminal accesses the candidate cell, which may be for PCell change (handover) on the MCG (Master Cell Group) side.

Similarly, for the SCG (Secondary Cell Group) side, the network may also configure multiple CPAC candidate cells and corresponding execution conditions for the terminal. The terminal evaluates the CPAC candidate cells based on measurement results. If a candidate cell is evaluated to meet the execution conditions, the terminal accesses this candidate cell which is for PSCell addition/change on the SCG side.

### (III) Fast MCG Recovery

Fast MCG recovery may also be expressed as fast MCG link failure recovery, fast MCG failure recovery, or fast MCG link recovery. If a radio link failure occurs at the MCG side, and T316 is configured while the SCG side transmission is not suspended, the terminal may trigger a procedure of fast MCG recovery. The terminal starts the T316 timer and sends MCGFailureInformation to the MN (Master Node) via the SCG to request MCG recovery. When the MN receives the MCGFailureInformation message sent by the terminal, the MN may send RRCReconfiguration, RRC release, or MobilityFromNR to the terminal. Upon receiving the message sent by the MN, the terminal executes and successfully completes the procedure of the fast MCG recovery. If the terminal does not receive feedback from the network side before T316 expires, upon T316 expiry, the terminal fails to perform fast MCG recovery and may trigger a re-establishment procedure.

At least one embodiment of the present disclosure provides a method for mobility optimization, apparatus, communication device, and storage medium. When the terminal is configured with multiple types of configuration information, the terminal is in a scenario in which multiple configurations coexist. In the scenario in which multiple configurations coexist, if a link failure occurs at the terminal, the terminal records failure-related information and then sends the failure-related information to a network device. The failure-related information is used by the network device to perform mobility optimization.That is, the failure-related information generated in the scenario in which multiple configurations coexist triggers the network device to perform mobility optimization. Compared with the related art in which mobility optimization is triggered by the network device by detecting network status, the present embodiment enables the network device to perform timely mobility optimization when a link failure occurs at the terminal, thereby timely optimizing the connection state between the terminal and the network, and further ensuring normal implementation of various network services.

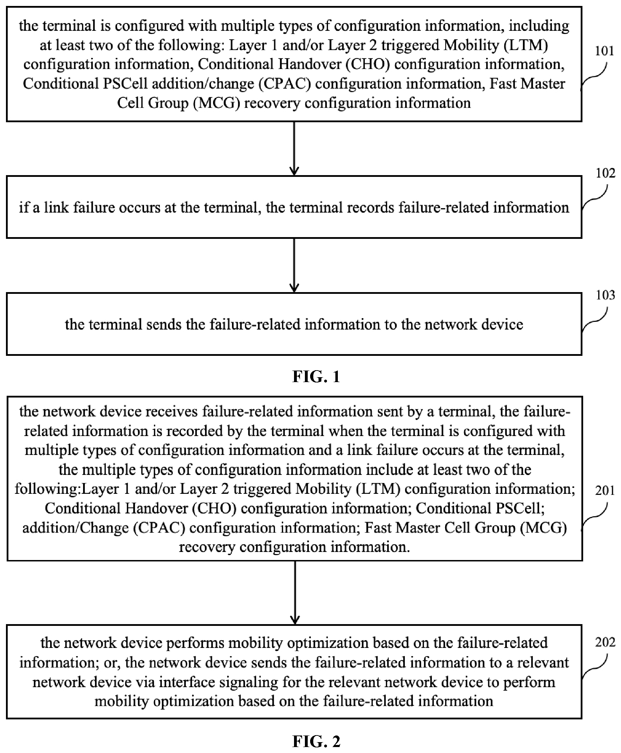

FIG. 1 is a schematic flowchart of a method for mobility optimization provided by an embodiment of the present disclosure, which is applied to a terminal. As shown in FIG. 1, the method for mobility optimization may include, but is not limited to, steps 101 to 103:
In step 101, the terminal is configured with multiple types of configuration information, including at least two of the following:
Layer 1 and/or Layer 2 triggered Mobility (LTM) configuration information, which may be MCG LTM configuration information and/or SCG LTM configuration information;
Conditional Handover (CHO) configuration information;
Conditional PSCell addition/change (CPAC) configuration information;
Fast Master Cell Group (MCG) recovery configuration information.

For example, coexistence scenarios may include, but are not limited to, the following types:
(1) Coexistence of LTM (MCG) configuration information and CHO configuration information;
(2) Coexistence of LTM (MCG) configuration information and fast MCG recovery configuration information;
(3) Coexistence of LTM (MCG) configuration information, CHO configuration information and fast MCG recovery configuration information;
(4) Coexistence of LTM (SCG) configuration information and CPAC configuration information.

Specifically, for example, a scenario where LTM configuration information coexists with CHO configuration information means that the terminal is configured with both LTM configuration information (including LTM candidate cell configuration, L1 measurement configuration, etc.) and CHO configuration information (including CHO candidate cell configuration, execution condition configuration, etc.). A scenario where LTM configuration information coexists with fast MCG recovery configuration information means that the terminal is configured with both LTM configuration information and fast MCG recovery configuration information (i.e., T316 configuration).

In the present embodiment, when the terminal is configured with multiple types of configuration information, the terminal is in a multi-configuration coexistence scenario, and the present embodiment defines that the multi-configuration coexistence scenario includes at least two types of the configuration information described above. Currently, although a terminal may be configured with multiple types of configuration information, the network side can only perform mobility optimization for one of the configurations. For instance, mobility optimization is performed only for CHO execution failure, even if the terminal is configured with both LTM configuration information and CHO configuration information. However, the LTM configured by the network, which has not been executed, may also be problematic, and LTM-related information should also be reported to the network for network-side analysis and optimization. In some embodiments, when mobility optimization is performed only for LTM execution failure, the CHO-related information should also be reported to the network for network-side analysis and optimization. The present disclosure enables mobility optimization for scenarios where multiple configurations coexist.

In step 102, if a link failure occurs at the terminal, the terminal records failure-related information.

Currently, when a link failure occurs at the terminal, the terminal does not record failure-related information for a scenario where multiple configurations coexist. That is, the terminal does not record various configuration-related information in the multi-configuration coexistence scenario, but only records failure-related information associated with one particular configuration. In the present disclosure, however, if a link failure occurs at the terminal and the terminal is in a scenario where multiple configurations coexist, the terminal records failure-related information for the coexistence scenario. The failure-related information may include not only the failure-related information of each individual configuration in the multi-configuration coexistence scenario, but also relative relationship information between different configuration information. The failure-related information for the coexistence scenario herein refers to failure-related information associated with two or more configuration information in the coexistence scenario, such as failure-related information associated with LTM configuration and CHO configuration.

In some embodiments, the terminal records the failure-related information in a report, wherein the report includes one or more of the following: a Radio Link Failure (RLF) report, a non-RLF report, and a customized report. The non-RLF report may be one or more of a CEF report, a RACH Report, SHR, SPR, SCGFailureInformation message, and the like.

For example, in a scenario where multiple configurations coexist, for a single failure, in addition to failure-related information, the terminal may record other configuration information, for example, in a scenario where LTM execution fails but recovery succeeds (either LTM recovery succeeds or CHO recovery succeeds). The terminal may also record CHO configuration information (such as information of each CHO candidate cell and execution conditions) or configuration indication information, wherein the configuration indication information is used to indicate that the terminal has been configured with CHO configuration information.

In a scenario where multiple configurations coexist, for consecutive failures, in addition to consecutive failure-related information, the terminal may record other configuration information. For example, for a case where LTM execution fails and subsequent LTM/CHO recovery also fails, the terminal may record LTM failure information and LTM/CHO recovery failure information, and may also record CHO configuration information (such as information of each CHO candidate cell and execution conditions) or configuration indication information, wherein the configuration indication information is used to indicate that the terminal has been configured with CHO configuration information.

The failure-related information recorded by the terminal may be stored in one report, but is not limited to being recorded in only one report.

In step 103, the terminal sends the failure-related information to the network device.

In the present embodiment, the network device may be, for example, a base station in the access network. The failure-related information is used by the network device to perform mobility optimization. That is, the network device performs mobility optimization based on the failure-related information generated in the scenario where multiple configurations coexist and reported by the terminal. Compared with the related art in which the network device cannot perform mobility optimization for a scenario where multiple configurations coexist, the present embodiment enables the network device to perform mobility optimization for the scenario where multiple configurations coexist, thereby ensuring the mobility of the terminal in the scenario where multiple configurations coexist.

In some embodiments, "a link failure occurs at the terminal" in step 102 includes one or more of the following:
a radio link failure RLF occurring at the terminal in a source cell,
a failure in performing LTM by the terminal;
a failure in performing LTM recovery by the terminal;
a failure in performing CHO by the terminal;
a failure in performing CHO recovery by the terminal;
a failure in performing legacy handover by the terminal;
a failure in performing CPAC by the terminal;
a failure in performing fast Master Cell Group recovery by the terminal.

In the present embodiment, performing LTM recovery by the terminal may be understood as follows: when a link failure occurs at the terminal, the terminal performs cell selection. If the selected cell is one of the LTM candidate cells, the terminal applies the LTM configuration of the candidate cell, which is referred to as LTM recovery.

In the present embodiment, performing CHO recovery by the terminal may be understood as follows: when a link failure occurs at the terminal, the terminal performs cell selection. If the selected cell is one of the CHO candidate cells, the terminal applies the CHO configuration of the candidate cell, which is referred to as CHO recovery.

In step 102, "a link failure occurs at the terminal" includes, for example but not limited to, the following ten failure scenarios:
(1) A radio link failure (RLF) occurs at the terminal in the source cell, and the terminal succeeds (or fails) in performing a CHO/LTM recovery procedure (the terminal is configured with both CHO configuration information and LTM configuration information).
(2) An RLF occurs at the terminal in the source cell, the terminal succeeds in performing a CHO/LTM recovery procedure, but an RLF occurs shortly after in the CHO/LTM recovery cell (the terminal is configured with both CHO configuration information and LTM configuration information).
(3) The terminal fails to perform LTM, and the terminal succeeds/fails in performing a CHO recovery procedure (the terminal is configured with both CHO configuration information and LTM configuration information).
(4) The terminal fails to perform LTM, the terminal succeeds in performing a CHO recovery procedure, but an RLF occurs shortly after in the CHO recovery cell (the terminal is configured with both CHO configuration information and LTM configuration information).
(5) The terminal fails to perform CHO, and the terminal succeeds/fails in performing an LTM recovery procedure (the terminal is configured with both CHO configuration information and LTM configuration information).
(6) The terminal fails to perform CHO, the terminal succeeds in performing an LTM recovery procedure, but an RLF occurs shortly after in the LTM recovery cell (the terminal is configured with both CHO configuration information and LTM configuration information).
(7) The terminal fails to perform legacy HO, and the terminal succeeds (or fails) in performing a CHO/LTM recovery procedure (the terminal is configured with both CHO configuration information and LTM configuration information).
(8) The terminal fails to perform legacy HO, the terminal succeeds in performing a CHO/LTM recovery procedure, but an RLF occurs shortly after in the CHO/LTM recovery cell (the terminal is configured with both CHO configuration information and LTM configuration information).
(9) The terminal fails to perform LTM, and the terminal succeeds (or fails) in performing a fast MCG recovery procedure (the terminal is configured with both LTM configuration information and fast MCG recovery configuration information).
(10) The terminal fails to perform LTM, the terminal succeeds in performing a fast MCG recovery procedure, but an RLF occurs shortly after in the target recovery cell (the terminal is configured with both LTM configuration information and fast MCG recovery configuration information).

In some embodiments, the failure-related information recorded by the terminal in step 102 includes one or more of the following:
candidate cell information;
time information;
indication information.

In some embodiments, the candidate cell information in the failure-related information includes one or more of the following:
LTM candidate cell information;
CHO candidate cell information;
CPAC candidate cell information.

In some embodiments, the candidate cell information in the failure-related information includes one or more of the following items (1) to (3):
(1) Identification information of candidate cells.

The identification information of a candidate cell may be PCI (Physical Cell ID) together with a frequency point, or CGI (Cell Global Identifier). The identification information of the LTM candidate cell refers to the identification information of each LTM candidate cell configured for the terminal by the network. The identification information of the CHO candidate cell refers to the identification information of each CHO candidate cell configured for the terminal by the network. The identification information of the CPAC candidate cell refers to the identification information of each CPAC candidate cell configured for the terminal by the network.

The identification information may be recorded in one of the following ways:
- Recorded in a list, i.e., a list is introduced to record identification information of the candidate cells, wherein each entry in the list corresponds to the identification information of one candidate cell;
- An indication is introduced to indicate whether a neighboring cell in neighbor cell measurements is a candidate cell configured by network. For example, a 1-bit indicator is introduced for each neighboring cell in L3 neighbor cell measurement reporting to indicate whether the neighboring cell is a CHO candidate cell, or a 1-bit indicator is introduced for each neighboring cell in L1 measurement reporting to indicate whether the neighboring cell is an LTM candidate cell;
- A combined manner, i.e., part of the identification information of the candidate cells is recorded in a list, and another part is indicated in neighbor cell measurement results. For example, for neighboring cells included in neighbor cell measurements, the identification information of the candidate cell is reported via indication in measurement results; for candidate cells not included in neighbor cell measurements, the identification information is reported in a list.

(2) Execution conditions of candidate cells.

The execution conditions of candidate cells are the conditions configured by the network for each candidate cell. When the terminal evaluates that the execution conditions are satisfied, the terminal will access the candidate cell. The execution conditions may be A3/A4/A5 events, etc. For example, for the execution conditions of CHO candidate cells: the network configures execution conditions (one or two execution conditions, which may be A3 and/or A5 events) for each CHO candidate cell. When the execution conditions of one CHO candidate cell are satisfied, the terminal accesses the CHO candidate cell. For the execution conditions of CPAC candidate cells: the network configures execution conditions (one or two execution conditions, which may be A3 and/or A4 and/or A5 events) for each CPAC candidate cell. When the execution conditions of one CPAC candidate cell are satisfied, the terminal accesses the CPAC candidate cell.

(3) Measurement results of candidate cells.

Measurement result information of candidate cells may be L3 measurement results (including cell-level measurement results and/or beam-level measurement results) or L1 measurement results. For example, for CHO or CPAC candidate cells, L3 measurement results of the candidate cells may be reported; for LTM candidate cells, L1 measurement results may be reported. L3 measurement results may include RSRP, SINR, etc., and L1 measurement results may include L1-RSRP, etc.

Therefore, if the candidate cell information includes LTM candidate cell information, the LTM candidate cell information includes one or more of the following: identification information of LTM candidate cells; execution conditions of LTM candidate cells; measurement results of LTM candidate cells.

If the candidate cell information includes CHO candidate cell information, the CHO candidate cell information includes one or more of the following: identification information of CHO candidate cells; execution conditions of CHO candidate cells; measurement results of CHO candidate cells.

If the candidate cell information includes CPAC candidate cell information, the CPAC candidate cell information includes one or more of the following: identification information of CPAC candidate cells; execution conditions of CPAC candidate cells; measurement results of CPAC candidate cells.

In some embodiments, the time information in the failure-related information includes one or more of the following:
a time interval between reception of LTM configuration information by the terminal and reception of CHO configuration information by the terminal;
a time interval between reception of LTM configuration information by the terminal and reception of CPAC configuration information by the terminal;
a time interval between reception of LTM configuration information by the terminal and initiation of CHO execution;
a time interval between the terminal reception of CHO configuration information by the terminal and initiation of LTM execution;
a time interval between reception of LTM configuration information by the terminal and initiation of CPAC execution;
a time interval between the terminal reception of CPAC configuration information by the terminal and initiation of LTM execution;
a time interval between reception of LTM configuration information by the terminal and any one of: initiation of CHO recovery, successful CHO recovery, or failed CHO recovery;
a time interval between reception of CHO configuration information by the terminal and any one of: initiation of LTM recovery, the successful LTM recovery, failed LTM recovery;
a time interval between reception of LTM configuration information by the terminal and any one of: initiation of primary cell group fast failure recovery, the successful primary cell group fast failure recovery, failed primary cell group fast failure recovery;
a time interval between a failure in performing LTM by the terminal and any one of: initiation of CHO recovery, , successful CHO recovery, or failed CHO recovery;
a time interval between a failure in performing CHO by the terminal and any one of: initiation of LTM recovery, the successful LTM recovery, failed LTM recovery;
a time interval between a failure in performing LTM by the terminal and any one of: initiation of primary cell group fast failure recovery, the successful primary cell group fast failure recovery, failed primary cell group fast failure recovery.

The time unit of the various time information above may be milliseconds, seconds, etc., which is not limited herein, and the various time information above is not subject to any sequence restriction.

It can be seen that the time information in the failure-related information reflects the relative relationship information between different pieces of configuration information.

In some embodiments, the indication information in the failure-related information includes one or more of the following items (1) to (6):
(1) type information of a recovery cell on which the terminal performs recovery.

In the present embodiment, the indication information is used to indicate the type information of the recovery cell on which the terminal performs recovery. That is, if a link failure occurs at the terminal, the terminal performs cell selection. If the selected cell is a candidate cell among LTM candidate cells and/or CHO candidate cells, the indication information may be used to indicate that the candidate cell is a CHO candidate cell, an LTM candidate cell, or both. It may be reported in an enumeration type: {CHO candidate cell, LTM candidate cell, both}.

(2) Indication information of the coexistence scenario.

In the present embodiment, the indication information is used to indicate the coexistence scenario, i.e., which coexistence scenario the terminal is in when the failure occurs. It may be in an enumeration type, such as {LTM+CHO, LTM+CPAC, LTM+fast MCG recovery, LTM+CHO+fast MCG recovery}. Alternatively, the indication information may be in separate indication information. For example, for an LTM+CHO coexistence scenario, one LTM indication information and one CHO indication information may be introduced respectively, or indicated implicitly, i.e., the recorded information includes relevant information about LTM and CHO.

(3) Indication information of consecutive execution.

In the present embodiment, the indication information is used to indicate the order in which the terminal consecutively executes LTM, CHO, CPAC, and fast MCG recovery. For example, the execution order of the terminal may be LTM followed by CHO recovery, meaning the terminal first performs LTM and then performs CHO recovery. The indication information may be represented explicitly or implicitly. In the explicit manner, the terminal clearly records that it performs LTM first and then CHO recovery, for example using an enumeration type: {LTM-CHO Recovery, CHO-LTM Recovery, ...}, which may also be used in a consecutive failure scenario to indicate the order of consecutive failures. In the implicit manner, it can be determined from the failure-related information recorded by the terminal that LTM is performed first and then CHO recovery. For instance, the first failure information is LTM failure-related information while the recovery cell is a CHO candidate cell; or according to the recording order, for example, the first LTM failure-related information is recorded at the front of the report, and the subsequent CHO recovery-related information is recorded at the rear of the report.

(4) Indication information of Timing Advance (TA). The indication information of Timing Advance is used to indicate whether the terminal has a Timing Advance TA value and/or the size of the TA value of the recovery cell, wherein the recovery cell used by the terminal for recovery is an LTM candidate cell.

In the present embodiment, if the recovery cell on which the terminal performs recovery is an LTM candidate cell, the indication information of TA is used to indicate whether the terminal has the Timing Advance TA value of the recovery cell and/or the size of the TA value, and is used to indicate whether the terminal has calculated the TA value of the recovery cell and what the calculated TA value is when the recovery cell is an LTM candidate cell.

(5) Indication information of downlink synchronization. The indication information of downlink synchronization is used to indicate whether whether the terminal has performed downlink synchronization with the recovery cell, and the recovery cell on which the terminal performs recovery is an LTM candidate cell.

In the present embodiment, if the recovery cell on which the terminal performs recovery is an LTM candidate cell, the indication information of downlink synchronization is used to indicate whether the terminal has achieved downlink synchronization with the recovery cell, and is used to indicate whether the terminal has completed downlink synchronization with the recovery cell or has performed early downlink synchronization when the recovery cell is an LTM candidate cell.

(6) Indication information of the same Distributed Unit (DU). The indication information of the same Distributed Unit is used to indicate whether the source cell of the terminal and the recovery cell belong to cells under the same DU, wherein the recovery cell used by the terminal for recovery is an LTM candidate cell.

In the present embodiment, if the recovery cell on which the terminal performs recovery is an LTM candidate cell, the indication information of the same Distributed Unit (DU) is used to indicate whether the source cell of the terminal and the recovery cell belong to cells under the same DU, and is used to indicate whether the source cell and the recovery cell are cells under the same DU when the recovery cell is an LTM candidate cell.

In some embodiments, the terminal sends the failure-related information to the network device in step 103 through one or more of the following three methods:
Method 1: The terminal sends a notification message to the network device. The notification message is used to indicate that the terminal has recorded failure-related information. In response to a failure-related information request message sent by the network device, the terminal sends the failure-related information to the network device.

The notification message may be one or more of an RRC Reconfiguration Complete message, an RRC Connection Setup Complete message, an RRC Connection Resume Complete message, and an RRC Connection Reestablishment Complete message. A 1-bit notification flag is set in the notification message. A notification flag value of 1 indicates that the terminal has recorded failure-related information. In some embodiments, the notification message may be a customized message, that is, an existing message is not used to send the notification.

It can be seen that in Method 1, the terminal actively notifies the network device that it has recorded failure-related information. After receiving the notification message, the network device may send a failure-related information request message to the terminal. Upon receiving the failure-related information request message, the terminal sends the failure-related information to the network device

Method 2: After recording the failure-related information, the terminal sends the failure-related information to the network device.

It can be seen that in Method 2, the terminal does not notify the network device; instead, it sends the failure-related information directly after recording the failure-related information. The terminal does not need to send a notification message to the network device, nor does the network device need to send a request message to the terminal, thereby reducing signaling interaction and overhead.

Method 3: The terminal receives a failure-related information request message sent by the network device; in response to the failure-related information request message, the terminal sends the failure-related information to the network device.

It can be seen that in Method 3, the terminal does not perform any proactive operations (including sending a notification message proactively or sending failure-related information proactively), but responds passively to the request message from the network device. Specifically, the terminal sends the failure-related information to the network device only upon receiving the failure-related information request message from the network device.

It should be noted that in Method 3, since the terminal does not send a notification message to the network device, the network device does not know whether the terminal has already recorded the relevant information when sending the failure-related information request message. Therefore, when the network device sends the request message, the terminal may not have recorded the failure-related information yet, and the terminal will have no failure-related information to feedback to the network device even if it receives the request message.

Those skilled in the art may configure the terminal to perform one or more of the above three methods according to actual requirements.

FIG. 2 is a schematic flowchart of another method for mobility optimization provided by an embodiment of the present disclosure, which is applied to a network device. As shown in FIG. 2, the method for mobility optimization may include, but is not limited to, steps 201 and 202:
In step 201, the network device receives failure-related information sent by a terminal.The failure-related information is recorded by the terminal when the terminal is configured with multiple types of configuration information and a link failure occurs at the terminal. The multiple types of configuration information include at least two of the following:
Layer 1 and/or Layer 2 triggered Mobility (LTM) configuration information;
Conditional Handover (CHO) configuration information;
Conditional PSCell Addition/Change (CPAC) configuration information;
Fast Master Cell Group (MCG) recovery configuration information.

In step 202, the network device performs mobility optimization based on the failure-related information; or, the network device sends the failure-related information to a relevant network device via interface signaling for the relevant network device to perform mobility optimization based on the failure-related information.

The interface signaling may be one or more of Xn, X2, E1, F1 and other interface signaling.

In some embodiments, the network device receives the failure-related information sent by the terminal in step 201 through one or more of the following three methods:
Method 1: The network device receives a notification message sent by the terminal, wherein the notification message is used to indicate that the terminal has recorded failure-related information. The network device sends a failure-related information request message to the terminal. The network device receives the failure-related information sent by the terminal in response to the failure-related information request message.

It can be seen that in Method 1, after receiving the notification message, the network device can know that the terminal has recorded failure-related information, and then the network device may send a failure-related information request message to the terminal so as to receive the failure-related information sent by the terminal in response to the request message.

Method 2: The network device sends a failure-related information request message to the terminal. The network device receives the failure-related information sent by the terminal in response to the failure-related information request message.

It can be seen that in Method 2, since the terminal does not send a notification message to the network device, the network device does not know whether the terminal has recorded the relevant information when sending the failure-related information request message. Therefore, when the network device sends the failure-related information request message, the terminal may not have recorded the failure-related information yet, and the terminal will have no failure-related information to feedback to the network device even if the terminal receives the failure-related information request message.

Method 3: The network device passively receives the failure-related information sent by the terminal.

It can be seen that in Method 3, the network device no longer actively sends a failure-related information request message to the terminal, but passively receives the failure-related information sent by the terminal.

Those skilled in the art may configure the network device to perform one or more of the above three methods according to actual requirements.

It should be noted that for the convenience of description, the foregoing method embodiments are all expressed as a series of action combinations. However, those skilled in the art can understand that the embodiments of the present disclosure are not limited by the described sequence of actions, because according to the embodiments of the present disclosure, certain steps may be performed in other orders or simultaneously. In addition, those skilled in the art can understand that the embodiments described in the specification are all optional embodiments.

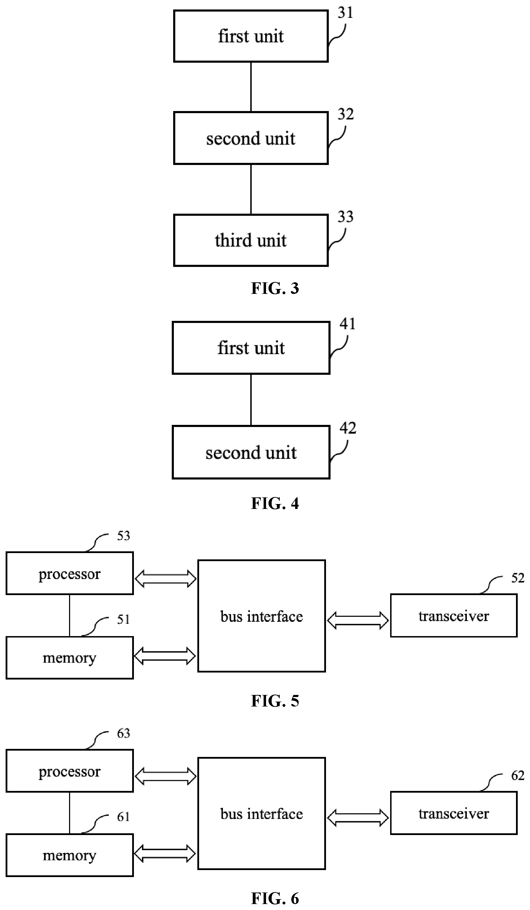

FIG. 3 is a schematic diagram of an apparatus for mobility optimization provided by an embodiment of the present disclosure. The apparatus for mobility optimization is applied to a terminal. As shown in FIG. 3, the apparatus for mobility optimization includes, but is not limited to, a first unit 31, a second unit 32, and a third unit 33, which are described in detail as follows:
The first unit 31 is configured to be provided with multiple types of configuration information, including at least two of the following: Layer 1 and/or Layer 2 triggered Mobility (LTM) configuration information, Conditional Handover (CHO) configuration information, Conditional PSCell Addition or Change (CPAC) configuration information, and fast Master Cell Group (MCG) recovery configuration information.

The second unit 32 is configured to record failure-related information if a link failure occurs.

The third unit 33 is configured to send the failure-related information to a network device.

In some embodiments, the link failure includes one or more of the following:
a radio link failure RLF occurring at the terminal in a source cell,
a failure in performing LTM by the terminal;
a failure in performing LTM recovery by the terminal;
a failure in performing CHO by the terminal;
a failure in performing CHO recovery by the terminal;
a failure in performing legacy handover by the terminal;
a failure in performing CPAC by the terminal;
a failure in performing fast Master Cell Group recovery by the terminal.

In some embodiments, the failure-related information includes one or more of the following:
candidate cell information;
time information;
indication information.

In some embodiments, the candidate cell information includes one or more of the following:
LTM candidate cell information;
CHO candidate cell information;
CPAC candidate cell information.

In some embodiments, the time information includes one or more of the following:
a time interval between reception of LTM configuration information by the terminal and reception of CHO configuration information by the terminal;
a time interval between reception of LTM configuration information by the terminal and reception of CPAC configuration information by the terminal;
a time interval between reception of LTM configuration information by the terminal and initiation of CHO execution;
a time interval between the terminal reception of CHO configuration information by the terminal and initiation of LTM execution;
a time interval between reception of LTM configuration information by the terminal and initiation of CPAC execution;
a time interval between the terminal reception of CPAC configuration information by the terminal and initiation of LTM execution;
a time interval between reception of LTM configuration information by the terminal and any one of: initiation of CHO recovery, successful CHO recovery, or failed CHO recovery;
a time interval between reception of CHO configuration information by the terminal and any one of: initiation of LTM recovery, the successful LTM recovery, failed LTM recovery;
a time interval between reception of LTM configuration information by the terminal and any one of: initiation of primary cell group fast failure recovery, the successful primary cell group fast failure recovery, failed primary cell group fast failure recovery;
a time interval between a failure in performing LTM by the terminal and any one of: initiation of CHO recovery, , successful CHO recovery, or failed CHO recovery;
a time interval between a failure in performing CHO by the terminal and any one of: initiation of LTM recovery, the successful LTM recovery, failed LTM recovery;
a time interval between a failure in performing LTM by the terminal and any one of: initiation of primary cell group fast failure recovery, the successful primary cell group fast failure recovery, failed primary cell group fast failure recovery.

In some embodiments, the indication information includes one or more of the following:
type information of a recovery cell on which the terminal performs recovery;
indication information of a coexistence scenario;
indication information of consecutive execution;
indication information of timing advance, wherein the indication information of timing advance is used to indicate whether the terminal has a Timing Advance TA value of the recovery cell and/or a size of the TA value, and the recovery cell on which the terminal performs recovery is an LTM candidate cell;
indication information of downlink synchronization, wherein the indication information of downlink synchronization is used to indicate whether the terminal has performed downlink synchronization with the recovery cell, and the recovery cell on which the terminal performs recovery is an LTM candidate cell;
indication information of a same distributed unit, wherein the indication information of a same distributed unit is used to indicate whether a source cell of the terminal and the recovery cell are cells under a same Distributed Unit DU, and the recovery cell on which the terminal performs recovery is an LTM candidate cell.

In some embodiments, the candidate cell information includes one or more of the following:
identification information of a candidate cell;
execution condition of a candidate cell;
measurement results of a candidate cell.

In some embodiments, the third unit 33 is configured to:
send a notification message to the network device, wherein the notification message is used to indicate that the terminal has recorded failure-related information, and send the failure-related information to the network device in response to a failure-related information request message sent by the network device;
   and/or
send the failure-related information to the network device after the second unit 32 records the failure-related information;
   and/or
receive a failure-related information request message sent by the network device, and send the failure-related information to the network device in response to the failure-related information request message.

For details of various embodiments of the apparatus for mobility optimization shown in FIG. 3, reference may be made to the various embodiments of the method for mobility optimization shown in FIG. 1, which will not be repeated to avoid redundancy.

FIG. 4 is a schematic diagram of another apparatus for mobility optimization provided by an embodiment of the present disclosure. The apparatus for mobility optimization is applied to a network device. As shown in FIG. 4, the apparatus for mobility optimization includes, but is not limited to, a first unit 41 and a second unit 42, which are described in detail as follows:
The first unit 41 is configured to receive failure-related information sent by a terminal. The failure-related information is recorded by the terminal when the terminal is configured with multiple types of configuration information and a link failure occurs at the terminal. The multiple types of configuration information include at least two of the following:
Layer 1 and/or Layer 2 triggered Mobility (LTM) configuration information, Conditional Handover (CHO) configuration information, Conditional PSCell Addition or Change (CPAC) configuration information, and fast Master Cell Group (MCG) recovery configuration information.

The second unit 42 is configured to perform mobility optimization based on the failure-related information, or send the failure-related information to a relevant network device via interface signaling for the relevant network device to perform mobility optimization based on the received failure-related information.

In some embodiments, the first unit 41 is configured to:
receive a notification message sent by the terminal, wherein the notification message is used to indicate that the terminal has recorded failure-related information; send a failure-related information request message to the terminal; and receive the failure-related information sent by the terminal in response to the failure-related information request message;
   and/or,
send a failure-related information request message to the terminal; and receive the failure-related information sent by the terminal in response to the failure-related information request message.

For details of various embodiments of the mobility optimization apparatus shown in FIG. 4, reference may be made to the various embodiments of the method for mobility optimization shown in FIG. 2, which will not be repeated to avoid redundancy.

Embodiments of the present disclosure further provide a processor-readable storage medium storing a program, wherein the program is configured to cause a processor to perform the steps of the embodiments of the method for mobility optimization.The processor-readable storage medium may be any available medium or data storage device that can be accessed by a processor, including but not limited to magnetic memory (e.g., floppy disk, hard disk, magnetic tape, magneto-optical disk (MO), etc.), optical memory (e.g., CD, DVD, BD, HVD, etc.), and semiconductor memory (e.g., ROM, EPROM, EEPROM, non-volatile memory (NAND FLASH), solid state disk (SSD)), etc.

FIG. 5 is a schematic diagram of a communication device provided by an embodiment of the present disclosure, which is applied to a terminal. As shown in FIG. 5, the communication device provided by an embodiment of the present disclosure includes a memory 51, a transceiver 52, and a processor 53:
The memory 51 is configured to store computer programs; the transceiver 52 is configured to transmit and receive data under the control of the processor 53; the processor 53 is configured to read the computer programs from the memory 51 and execute:
being configured with multiple types of configuration information, including at least two of the following:
Layer 1 and/or Layer 2 triggered Mobility (LTM) configuration information, Conditional Handover (CHO) configuration information, Conditional PSCell Addition or Change (CPAC) configuration information, and fast Master Cell Group (MCG) recovery configuration information;
recording failure-related information if a link failure occurs;
sending the failure-related information to a network device.

In some embodiments, the link failure includes one or more of the following:
a radio link failure RLF occurring at the terminal in a source cell,
a failure in performing LTM by the terminal;
a failure in performing LTM recovery by the terminal;
a failure in performing CHO by the terminal;
a failure in performing CHO recovery by the terminal;
a failure in performing legacy handover by the terminal;
a failure in performing CPAC by the terminal;
a failure in performing fast Master Cell Group recovery by the terminal.

In some embodiments, the failure-related information includes one or more of the following:
candidate cell information;
time information;
indication information.

In some embodiments, the candidate cell information includes one or more of the following:
LTM candidate cell information;
CHO candidate cell information;
CPAC candidate cell information.

In some embodiments, the time information includes one or more of the following:
a time interval between reception of LTM configuration information by the terminal and reception of CHO configuration information by the terminal;
a time interval between reception of LTM configuration information by the terminal and reception of CPAC configuration information by the terminal;
a time interval between reception of LTM configuration information by the terminal and initiation of CHO execution;
a time interval between the terminal reception of CHO configuration information by the terminal and initiation of LTM execution;
a time interval between reception of LTM configuration information by the terminal and initiation of CPAC execution;
a time interval between the terminal reception of CPAC configuration information by the terminal and initiation of LTM execution;
a time interval between reception of LTM configuration information by the terminal and any one of: initiation of CHO recovery, successful CHO recovery, or failed CHO recovery;
a time interval between reception of CHO configuration information by the terminal and any one of: initiation of LTM recovery, the successful LTM recovery, failed LTM recovery;
a time interval between reception of LTM configuration information by the terminal and any one of: initiation of primary cell group fast failure recovery, the successful primary cell group fast failure recovery, failed primary cell group fast failure recovery;
a time interval between a failure in performing LTM by the terminal and any one of: initiation of CHO recovery, , successful CHO recovery, or failed CHO recovery;
a time interval between a failure in performing CHO by the terminal and any one of: initiation of LTM recovery, the successful LTM recovery, failed LTM recovery;
a time interval between a failure in performing LTM by the terminal and any one of: initiation of primary cell group fast failure recovery, the successful primary cell group fast failure recovery, failed primary cell group fast failure recovery.

In some embodiments, the indication information includes one or more of the following:
type information of a recovery cell on which the terminal performs recovery;
indication information of a coexistence scenario;
indication information of consecutive execution;
indication information of timing advance, wherein the indication information of timing advance is used to indicate whether the terminal has a Timing Advance TA value of the recovery cell and/or a size of the TA value, and the recovery cell on which the terminal performs recovery is an LTM candidate cell;
indication information of downlink synchronization, wherein the indication information of downlink synchronization is used to indicate whether the terminal has performed downlink synchronization with the recovery cell, and the recovery cell on which the terminal performs recovery is an LTM candidate cell;
indication information of a same distributed unit, wherein the indication information of a same distributed unit is used to indicate whether a source cell of the terminal and the recovery cell are cells under a same Distributed Unit DU, and the recovery cell on which the terminal performs recovery is an LTM candidate cell.

In some embodiments, the candidate cell information includes one or more of the following:
identification information of a candidate cell;
execution condition of a candidate cell;
measurement results of a candidate cell.

In some embodiments, sending the failure-related information to a network device comprises:
sending a notification message to the network device, the notification message being used to indicate that the terminal has recorded the failure-related information, and sending the failure-related information to the network device in response to a failure-related information request message sent by the network device;
   or,
after recording the failure-related information, sending the failure-related information to the network device;
   and/or,
receiving a failure-related information request message sent by the network device; and sending the failure-related information to the network device in response to the failure-related information request message.

In FIG. 5, the transceiver 52 is configured to receive and transmit data under the control of the processor 53. The bus architecture may include any number of interconnected buses and bridges, which specifically link together one or more processors represented by the processor 53 and various circuits of the memory represented by the memory 51. The bus architecture may also link together various other circuits such as peripheral devices, voltage regulators, power management circuits, and the like, which are well known in the art, and therefore will not be further described herein. A bus interface provides an interface. The transceiver 52 may be a plurality of elements, including a transmitter and a receiver, providing units for communicating with various other devices over transmission media, including wireless channels, wired channels, optical cables, and other transmission media. The processor 53 is responsible for managing the bus architecture and general processing, and the memory 51 may store data used by the processor 53 when performing operations.

In FIG. 5, the processor 53 may be an integrated circuit chip with signal processing capability. During implementation, the steps of the above method may be completed by integrated logic circuits of hardware in the processor 53 or instructions in the form of software. The processor 53 may be a general-purpose processor, a Digital Signal Processor (DSP), an Application Specific Integrated Circuit (ASIC), a Field Programmable Gate Array (FPGA) or other programmable logic devices, discrete gate or transistor logic devices, or discrete hardware components. A general-purpose processor may be a microprocessor, or the processor may be any conventional processor or the like.

FIG. 6 is a schematic diagram of another communication apparatus provided by an embodiment of the present disclosure, which is applied to a network device. As shown in FIG. 6, the communication apparatus provided by an embodiment of the present disclosure includes a memory 61, a transceiver 62, and a processor 63:
The memory 61 is configured to store computer programs; the transceiver 62 is configured to transmit and receive data under the control of the processor 63; the processor 63 is configured to read the computer programs from the memory 61 and execute:
receiving failure-related information sent by a terminal, wherein the failure-related information is recorded by the terminal when the terminal is configured with multiple types of configuration information and a link failure occurs at the terminal. The multiple types of configuration information include at least two of the following: Layer 1 and/or Layer 2 triggered Mobility (LTM) configuration information, Conditional Handover (CHO) configuration information, Conditional PSCell Addition or Change (CPAC) configuration information, and fast Master Cell Group (MCG) recovery configuration information.

In some embodiments, receiving the failure-related information sent by the terminal includes:
receiving a notification message sent by the terminal, wherein the notification message is used to indicate that the terminal has recorded failure-related information; sending a failure-related information request message to the terminal; receiving the failure-related information sent by the terminal in response to the failure-related information request message;
   and/or,
sending a failure-related information request message to the terminal; receiving the failure-related information sent by the terminal in response to the failure-related information request message.

In some embodiments, the processor 63 is further configured to read the computer programs from the memory and execute:
performing mobility optimization based on the failure-related information; or,
sending the failure-related information to a relevant network device via interface signaling for the relevant network device to perform mobility optimization based on the received failure-related information.

In FIG. 6, the transceiver 62 is configured to receive and transmit data under the control of the processor 63. The bus architecture may include any number of interconnected buses and bridges, which specifically link one or more processors represented by the processor 63 with various circuits of the memory represented by the memory 61. The bus architecture may also link various other circuits such as peripheral devices, voltage regulators, and power management circuits, which are well known in the art and therefore will not be further described herein. A bus interface provides the connection interface. The transceiver 62 may be a plurality of components, including a transmitter and a receiver, providing units for communicating with various other devices over transmission media including wireless channels, wired channels, optical cables, and other media. The processor 63 is responsible for managing the bus architecture and general processing operations, and the memory 61 may store data used by the processor 63 when performing operations.

In FIG. 6, the processor 63 may be an integrated circuit chip with signal processing capability. During implementation, the steps of the above method may be implemented by integrated logic circuits of hardware in the processor 63 or instructions in the form of software. The processor 63 may be a general-purpose processor, a Digital Signal Processor (DSP), an Application Specific Integrated Circuit (ASIC), a Field Programmable Gate Array (FPGA), or other programmable logic devices, discrete gate or transistor logic devices, or discrete hardware components. A general-purpose processor may be a microprocessor, or the processor may be any conventional processor.

It should be noted that, as used herein, the terms "include", "comprise", or any other variation thereof are intended to cover a non-exclusive inclusion, such that a process, method, article, or apparatus that includes a list of elements includes not only those elements, but also other elements not expressly listed, or elements inherent to such process, method, article, or apparatus.Without further limitation, an element defined by the phrase "including a..." does not exclude the presence of additional identical elements in the process, method, article, or apparatus that includes the element.

Those skilled in the art can understand that although some embodiments described herein include some features included in other embodiments rather than others, combinations of features of different embodiments are intended to be within the scope of the present disclosure and form different embodiments.

Those skilled in the art can understand that the description of each embodiment has its own emphasis. For parts not described in detail in a certain embodiment, reference may be made to the relevant descriptions of other embodiments.

Although the embodiments of the present disclosure have been described with reference to the accompanying drawings, those skilled in the art may make various modifications and variations without departing from the spirit and scope of the present disclosure. Such modifications and variations fall within the scope defined by the appended claims.

## Claims

1. A method for mobility optimization, applied to a terminal, **characterized by** comprising:
with the terminal configured with configuration information and in response to link failure on the terminal, recording, by the terminal, failure-related information; wherein the configuration information comprises at least two of the following: L1/L2 triggered mobility LTM configuration information, Conditional Handover CHO configuration information, Conditional PSCell addition/change (CPAC) configuration information, and fast Master Cell Group recovery configuration information;
sending, by the terminal, the failure-related information to a network device.

2. The method according to claim 1, **characterized in that** the link failure on the terminal comprises one or more of the following:
a radio link failure RLF occurring in a source cell,
a failure in performing LTM by the terminal;
a failure in performing LTM recovery by the terminal;
a failure in performing CHO by the terminal;
a failure in performing CHO recovery by the terminal;
a failure in performing legacy handover by the terminal;
a failure in performing CPAC by the terminal;
a failure in performing fast Master Cell Group recovery by the terminal.

3. The method according to claim 1, **characterized in that** the failure-related information includes one or more of the following:
candidate cell information;
time information;
indication information.

4. The method according to claim 3, **characterized in that** the candidate cell information includes one or more of the following:
LTM candidate cell information;
CHO candidate cell information;
CPAC candidate cell information.

5. The method according to claim 3, **characterized in that** the time information includes one or more of the following:
a time interval between reception of LTM configuration information by the terminal and reception of CHO configuration information by the terminal;
a time interval between reception of LTM configuration information by the terminal and reception of CPAC configuration information by the terminal;
a time interval between reception of LTM configuration information by the terminal and initiation of CHO execution;
a time interval between the terminal reception of CHO configuration information by the terminal and initiation of LTM execution;
a time interval between reception of LTM configuration information by the terminal and initiation of CPAC execution;
a time interval between the terminal reception of CPAC configuration information by the terminal and initiation of LTM execution;
a time interval between reception of LTM configuration information by the terminal and any one of: initiation of CHO recovery, successful CHO recovery, or failed CHO recovery;
a time interval between reception of CHO configuration information by the terminal and any one of: initiation of LTM recovery, the successful LTM recovery, failed LTM recovery;
a time interval between reception of LTM configuration information by the terminal and any one of: initiation of primary cell group fast failure recovery, the successful primary cell group fast failure recovery, failed primary cell group fast failure recovery;
a time interval between a failure in performing LTM by the terminal and any one of: initiation of CHO recovery, , successful CHO recovery, or failed CHO recovery;
a time interval between a failure in performing CHO by the terminal and any one of: initiation of LTM recovery, the successful LTM recovery, failed LTM recovery;
a time interval between a failure in performing LTM by the terminal and any one of: initiation of primary cell group fast failure recovery, the successful primary cell group fast failure recovery, failed primary cell group fast failure recovery.

6. The method according to claim 3, **characterized in that** the indication information includes one or more of the following:
type information of a recovery cell on which the terminal performs recovery;
indication information of a coexistence scenario;
indication information of consecutive execution;
indication information of timing advance, wherein the indication information of timing advance is used to indicate whether the terminal has a Timing Advance TA value of the recovery cell and/or a size of the TA value, and the recovery cell on which the terminal performs recovery is an LTM candidate cell;
indication information of downlink synchronization, wherein the indication information of downlink synchronization is used to indicate whether the terminal has performed downlink synchronization with the recovery cell, and the recovery cell on which the terminal performs recovery is an LTM candidate cell;
indication information of a same distributed unit, wherein the indication information of a same distributed unit is used to indicate whether a source cell of the terminal and the recovery cell are cells under a same Distributed Unit DU, and the recovery cell on which the terminal performs recovery is an LTM candidate cell.

7. The method according to claim 3 or 4, **characterized in that** the candidate cell information includes one or more of the following:
identification information of a candidate cell;
execution condition of a candidate cell;
measurement results of a candidate cell.

8. The method according to claim 1, **characterized in that** sending, by the terminal, the failure-related information to a network device comprises:
sending, by the terminal, a notification message to the network device, the notification message being used to indicate that the terminal has recorded the failure-related information, and sending, by the terminal, the failure-related information to the network device in response to a failure-related information request message sent by the network device;
or,
after recording the failure-related information, sending, by the terminal, the failure-related information to the network device;
and/or,
receiving, by the terminal, a failure-related information request message sent by the network device; sending, by the terminal, the failure-related information to the network device in response to the failure-related information request message.

9. A method for mobility optimization, applied to a network device, **characterized by** comprising:
receiving, by the network device, failure-related information sent by a terminal, wherein the failure-related information is recorded by the terminal when the terminal is configured with configuration information and a link failure occurs at the terminal; the configuration information includes at least two of the following: L1/L2 triggered mobility LTM configuration information, Conditional Handover CHO configuration information, Conditional PSCell addition/change (CPAC) configuration information, and primary cell group fast failure recovery configuration information.

10. The method according to claim 9, **characterized in that** receiving, by the network device, failure-related information sent by the terminal comprises:
receiving, by the network device, a notification message sent by the terminal, wherein the notification message is used to indicate that the terminal has recorded failure-related information; sending, by the network device, a failure-related information request message to the terminal; receiving, by the network device, the failure-related information sent by the terminal in response to the failure-related information request message;
and/or,
sending, by the network device, a failure-related information request message to the terminal; receiving, by the network device, the failure-related information sent by the terminal in response to the failure-related information request message.

11. The method according to claim 9, **characterized in that** the method further comprises:
performing, by the network device, mobility optimization based on the failure-related information; or
sending, by the network device, the failure-related information to a relevant network device related to the failure-related information via interface signaling for the relevant network device to perform mobility optimization based on the failure-related information.

12. A communication apparatus, applied to a terminal, **characterized by** comprising a memory, a transceiver, and a processor:
the memory, configured to store computer programs;
the transceiver, configured to transmit and receive data under the control of the processor;
the processor, configured to read the computer programs in the memory and execute:
recording failure-related information with the terminal configured with configuration information and in response to a link failure on the terminal; wherein the configuration information comprises at least two of the following: L1/L2 triggered mobility LTM configuration information, Conditional Handover CHO configuration information, Conditional PSCell addition/change (CPAC) configuration information, and fast Master Cell Group recovery configuration information;
sending the failure-related information to a network device.

13. The communication apparatus according to claim 12, **characterized in that** the link failure includes one or more of the following:
a radio link failure RLF occurring at the terminal in a source cell,
a failure in performing LTM by the terminal;
a failure in performing LTM recovery by the terminal;
a failure in performing CHO by the terminal;
a failure in performing CHO recovery by the terminal;
a failure in performing legacy handover by the terminal;
a failure in performing CPAC by the terminal;
a failure in performing fast Master Cell Group recovery by the terminal.

14. The communication apparatus according to claim 12, **characterized in that** the failure-related information includes one or more of the following:
candidate cell information;
time information;
indication information.

15. The communication apparatus according to claim 14, **characterized in that** the candidate cell information includes one or more of the following:
LTM candidate cell information;
CHO candidate cell information;
CPAC candidate cell information.

16. The communication apparatus according to claim 14, **characterized in that** the time information includes one or more of the following:
a time interval between reception of LTM configuration information by the terminal and reception of CHO configuration information by the terminal;
a time interval between reception of LTM configuration information by the terminal and reception of CPAC configuration information by the terminal;
a time interval between reception of LTM configuration information by the terminal and initiation of CHO execution;
a time interval between the terminal reception of CHO configuration information by the terminal and initiation of LTM execution;
a time interval between reception of LTM configuration information by the terminal and initiation of CPAC execution;
a time interval between the terminal reception of CPAC configuration information by the terminal and initiation of LTM execution;
a time interval between reception of LTM configuration information by the terminal and any one of: initiation of CHO recovery, successful CHO recovery, or failed CHO recovery;
a time interval between reception of CHO configuration information by the terminal and any one of: initiation of LTM recovery, the successful LTM recovery, failed LTM recovery;
a time interval between reception of LTM configuration information by the terminal and any one of: initiation of primary cell group fast failure recovery, the successful primary cell group fast failure recovery, failed primary cell group fast failure recovery;
a time interval between a failure in performing LTM by the terminal and any one of: initiation of CHO recovery, , successful CHO recovery, or failed CHO recovery;
a time interval between a failure in performing CHO by the terminal and any one of: initiation of LTM recovery, the successful LTM recovery, failed LTM recovery;
a time interval between a failure in performing LTM by the terminal and any one of: initiation of primary cell group fast failure recovery, the successful primary cell group fast failure recovery, failed primary cell group fast failure recovery.

17. The communication apparatus according to claim 14, **characterized in that** the indication information includes one or more of the following:
type information of a recovery cell on which the terminal performs recovery;
indication information of a coexistence scenario;
indication information of consecutive execution;
indication information of timing advance, wherein the indication information of timing advance is used to indicate whether the terminal has a Timing Advance TA value of the recovery cell and/or a size of the TA value, and the recovery cell on which the terminal performs recovery is an LTM candidate cell;
indication information of downlink synchronization, wherein the indication information of downlink synchronization is used to indicate whether the terminal has performed downlink synchronization with the recovery cell, and the recovery cell on which the terminal performs recovery is an LTM candidate cell;
indication information of a same distributed unit, wherein the indication information of a same distributed unit is used to indicate whether a source cell of the terminal and the recovery cell are cells under a same Distributed Unit DU, and the recovery cell on which the terminal performs recovery is an LTM candidate cell.

18. The communication apparatus according to claim 14 or 15, **characterized in that** the candidate cell information includes one or more of the following:
identification information of a candidate cell;
execution condition of a candidate cell;
measurement results of a candidate cell.

19. The communication apparatus according to claim 12, **characterized in that** sending the failure-related information to a network device comprises:
sending a notification message to the network device, the notification message being used to indicate that the terminal has recorded the failure-related information, and sending the failure-related information to the network device in response to a failure-related information request message sent by the network device;
or,
after recording the failure-related information, sending the failure-related information to the network device;
and/or,
receiving a failure-related information request message sent by the network device; and sending the failure-related information to the network device in response to the failure-related information request message.

20. A communication apparatus, applied to a network device, **characterized by** comprising a memory, a transceiver, and a processor:
the memory, configured to store computer programs;
the transceiver, configured to transmit and receive data under the control of the processor;
the processor, configured to read the computer programs in the memory and execute:
receiving failure-related information sent by a terminal, wherein the failure-related information is recorded by the terminal when the terminal is configured with configuration information and a link failure occurs at the terminal; the configuration information includes at least two of the following: L1/L2 triggered mobility LTM configuration information, Conditional Handover CHO configuration information, Conditional PSCell addition/change (CPAC) configuration information, and primary cell group fast failure recovery configuration information.

21. The communication apparatus according to claim 20, **characterized in that** receiving the failure-related information sent by the terminal comprises:
receiving a notification message sent by the terminal, wherein the notification message is used to indicate that the terminal has recorded failure-related information; sending a failure-related information request message to the terminal; receiving the failure-related information sent by the terminal in response to the failure-related information request message;
and/or,
sending a failure-related information request message to the terminal; receiving the failure-related information sent by the terminal in response to the failure-related information request message.

22. The communication apparatus according to claim 20, **characterized in that** the processor is further configured to read the computer programs in the memory and execute:
performing mobility optimization based on the failure-related information; or
sending the failure-related information to a relevant network device related to the failure-related information via interface signaling for the relevant network device to perform mobility optimization based on the failure-related information.

23. A processor-readable storage medium, **characterized in that** the processor-readable storage medium stores a program, and the program is configured to cause the processor to execute the method for mobility optimization according to any one of claims 1 to 8 or the method for mobility optimization according to any one of claims 9 to 11.
